# EUROPEAN PATENT APPLICATION

(11) **EP 3 028 995 A1**
(43) Date of publication of application: **08.06.2016**
(21) Application number: 14831757.1
(22) Date of filing: 31.07.2014
(51) Int. Cl.: C01D 15/00, C01G 53/00, C01G 51/00, C01G 45/00, H01M 4/525, H01M 4/505

(54) **LITHIUM COMPOSITE OXIDE AND MANUFACTURING METHOD THEREFOR**

(30) Priority: 31.07.2013 KR 20130091247
(71) Applicant: IUCF-HYU (Industry-University Cooperation Foundation Hanyang University), Seoul 133-791 (KR)
(72) Inventor: SUN, Yang-Kook, Seoul 135-280 (KR); YOUN, Sung June, Busan 617-030 (KR)
(74) Representative: Raynor, Stuart Andrew
(86) International application number: PCT/KR2014/007079
(87) International publication number: WO 2015/016647

(57) **Abstract**

The present invention relates to a lithium composite oxide and a manufacturing method therefor and, more specifically, to: a lithium composite oxide in which the concentration of manganese forming the lithium composite oxide exhibits a concentration gradient in the entirety of the particles from the center to the surface, and comprising secondary particles formed from the condensing of stick-shaped primary particles; and a manufacturing method thereof.

## Description

### TECHNICAL FIELD

The present invention relates to a lithium composite oxide and a manufacturing method thereof, and more specifically, to a lithium composite oxide capable of having thermal stability with a higher content of manganese and having a high capacity with stick-shaped primary particles even in a high temperature firing by controlling a concentration of the manganese, which constitutes the lithium composite oxide, at the center and the surface, and a manufacturing method of such a lithium composite oxide.

### BACKGROUND

In recent years, secondary batteries such as non-aqueous electrolytes or nickel-hydrogen batteries are increasingly holding embedded power sources of electric vehicles, portable terminals of personal computers, or power sources for other kinds of electric products.

Especially, secondary batteries of non-aqueous electrolytes, having a light weight and high-energy density, are looking forward to be much used as high-power electric sources for vehicles.

Anode materials, which are commercialized or being on development, are LiCoO₂, LiCoO₂, LiMnO₂, LiMn₂, 04, Li₁₊ₓ[Mn₂₋ₓMₓ]O₄, LiFePO₄, and so on. Among them, LiCoO₂ is regarded as an excellent battery material having stable charging/discharging characteristics, superior electroconductivity, high battery voltage, high stability, and plane discharge-voltage characteristics. However, as Co is small in reserve, high in cost, and toxic, it highly needs to develop other anode materials. Furthermore, Co is much degraded in thermal characteristics because of unstable crystalline structure due to a de-lithium effect during a charging.

For the purpose of overcoming such disadvantages, there are many trials for shifting exothermic start temperature to be higher or making exothermic peaks broad to prevent abrupt heat generation. For all that, any acceptable result is still not obtained. LiNi₁₋ₓCoₓO₂ (x = 0.1 - 0.3), in which cobalt is substituted a part of nickel, have shown superior charging/discharging and lifetime characteristics, whereas it could not solve the problem involved in thermal stability. Furthermore, although European Patent No. 0872450 have disclosed a type of LiₐCo_{b}Mn_{c}M_{b}Ni_{1-b+c+d}O₂ (M = B, Al, Si, Fe, Cr, Cu, Zn, W, Ti, Ga) which is substituted with another metal for Ni as well as with Co and Mn, the thermal stability could not be improved.

To improve the thermal stability, Korean Patent Publication No. 2005-0083869 has proposed a lithium transition metal oxide having a concentration profile of metal composition. This is about a method of first synthesizing interior materials with an uniform composition, coating a material with a different composition on the exterior to from a double layer, mixing the double layer with lithium salt, and then thermally treating the mixture. The interior material may be even used with a lithium transition metal oxide. However, the method is accompanied with discontinuous variation of metal composition with an anode active material between the generated interior and exterior material compositions, without continuous and gradual variation. Furthermore, since a powder synthesized by the published invention does not use ammonia which is a chelating agent, the powder is improper to be used as an anode active material for lithium secondary battery because of low tap density.

Korean Patent Publication No. 2007-0097923 has proposed an anode active material which includes an interior bulk and an exterior bulk, and exhibits a continuous concentration distribution according to positions of metal components on the exterior bulk. However, because such an anode active material has uniform concentration in the interior bulk but has variable metal composition in the exterior bilk, there is a need of developing a new anode material with more superior structure in stability and capacity.

Charging/discharging a lithium-ion secondary battery which includes a lithium-nickel composite oxide as an anode active material is executed by moving lithium ions between the anode active material and an electrolyte solution to make lithium ions reversibly come in and out the anode active material. Because of that, migration facility of lithium ions, i.e., mobility, heavily affects, especially, the output and rate characteristics. Therefore, it is very important to secure infiltration paths of lithium ions in the anode active material.

### DETAILED DESCRIPTION OF THE INVENTION TECHNICAL SUBJECT

The present invention is directed to provide a lithium composite oxide and a manufacturing method thereof, capable of having a high capacity with stick-shaped primary particles and lithium-ion infiltration paths even in a high temperature firing by controlling a concentration of the manganese at the center and the surface even while the content of manganese increases for higher thermal stability in order to solve the problems of the prior arts.

### SOLUTIONS OF THE SUBJECT

For the purpose of solving the subject,
the present invention provides a lithium composite oxide including: a first interior formed of secondary particles concentrated with a plurality of stick-shaped primary particles, formed in a radius of r1 (0.2 µm ≤ r1 ≤ 5 µm) from the center of the particle, and given in Formula 1; and
a second interior formed to a radius of r2 (r1 ≤ 10 µm) from the center of the particle and given in Formula 2.

[Formula 1] Liₐ₁Niₓ₁Co_{y1}Mn_{z1}O_{2+δ}

[Formula 2] Lᵢₐ₂Nᵢₓ₂C_{oy2}M_{nz1}O_{2+δ}

(in the Formula 1 and the Formula 2, 0 < a1 ≤ 1.1, 0 < a2 ≤ 1.1, 0 ≤ x2 ≤ 1, 0 ≤ y2 ≤ 1, 0.05 ≤ z1 ≤ 1, 0.15 ≤ z2 ≤ 1, 0.15 ≤ z2 ≤ 1, 0 ≤ w ≤ 0.1, 0.0 ≤ δ ≤ 1, Z1 ≤ Z2)

In a lithium composite oxide according to the present invention, 0 ≤ Z2-Z1 ≤ 0.2 and 0.3 ≤ Z2+Z1. That is, in a lithium composite oxide according to the present invention, a difference of Mn compositions between a first interior and a second interior should be maintained in a specific range and a sum of Mn compositions between the first interior and the second interior is preferred to be equal to or higher than 0.3.

A lithium composite oxide according to the present invention, as shown in Formula 1 and Formula 2, is technically characterized to maintain primary particles in a stick shape rather than a spherical shape even in a high temperature firing by adjusting manganese ratios in the first interior and the second interior. As aforementioned, in the conventional case that Mn content is high, primary particles are easily concentrated during a firing and thereby inevitably fired at high temperature. Differently, according to the present invention, it is allowable for primary particles to maintain their stick shapes during a high temperature firing, as well as high thermal stability, by conditioning Mn concentration gradient in particles and by controlling Mn concentration of the first interior and the second interior even while increasing Mn content for thermal stability.

In the lithium composite oxide according to the present invention, average composition over particles of the lithium composite oxide is given in Formula 3.

[Formula 3] Liₐ₁Niₓ₃Co_{y3}Mn_{z3}O_{2+δ}

(in the Formula 3, 0.15 ≤ z3 ≤0.5).

Additionally, a lithium composite oxide according to the present invention, as shown in Formula 3, must have average Mn composition, which is at least equal to or higher than 15 mol%, over particles. In the present invention, average Mn composition means Mn composition which can be represented in the case that Mn injected for manufacturing particles is formed without concentration gradient in the particles although Mn is practically injected with gradient in concentration.

Additionally, in the lithium composite oxide according to the present invention, wherein an aspect ratio of the stick-shaped primary particles is 1 to 10 and the stick-shaped primary particles are aligned with orientation toward the center in the particle.

Additionally, in the lithium composite oxide according to the present invention, a radius r1 of the first interior is preferred to be 0.2 µm ≤ r1 ≤ 5 µm. The first interior and the second interior may be differentiated apparently dependent on a size of the radius r1 of the first interior, whereas in the case that the first interior is equal to or smaller than a specific size, the entire of particles may be formed in a single structure without apparent differentiation between the first interior and the second interior due to diffusion of transition metal during thermal treatment at high temperature.

Additionally, in the lithium composite oxide according to the present invention, concentration of at least one of nickel, cobalt, and manganese exhibits a continuous gradient in at least a part of the second interior. In the lithium composite oxide according to the present invention, the second interior is not restrictive to a concrete structure if only concentration of at least one of nickel, cobalt, and manganese exhibits a continuous gradient in at least a part of the second interior. That is, it is allowable for concentration of at least one of nickel, cobalt, and manganese to have a continuous concentration gradient throughout the second interior, or allowable for the second interior to include 2-'th interior,..., and a 2-n'th interior (n is equal to or larger than 2) which are different each other in concentration gradient for at least one of nickel, cobalt, and manganese.

Additionally, in the case that concentration of at least one of nickel, cobalt, and manganese exhibits a continuous gradient in the second interior, a lithium composite oxide according to the present invention may include a third interior which has uniform concentration of nickel, cobalt, and manganese.

In the lithium composite oxide according to the present invention, an aspect ratio of the first interior is equal to or higher than 1.

The present invention also provides a manufacturing method of a lithium composite oxide including a first step of preparing an aqueous metal-salt solution for a first interior and an aqueous metal-salt solution for a second interior that include nickel, cobalt, and manganese and that are different each other in concentration of nickel, cobalt, and manganese;
a second step of mixing the aqueous metal-salt solution for the first interior, a chelating agent, and an aqueous basic solution in a reactor and growing particles with uniform concentration of nickel, cobalt, and manganese in a radius of r1;
a third step of mixing the aqueous metal-salt solution for the second interior, a chelating agent, and an aqueous basic solution at the contour of the first interior in the reactor and forming particles to include the second interior with a radius of r2 at the contour of the first interior that has the radius of r1;
a fourth step of drying or thermally treating the particles to manufacture active material precursors; and
a fifth step of mixing the active material precursors and lithium salt and thermally treating the mixture at temperature equal to or higher than 850°C.

In the manufacturing method according to the present invention, the third step, in the case that concentration of at least one of nickel, cobalt, and manganese exhibits a continuous gradient in the second interior, includes a step of mixedly supplying the chelating agent and the aqueous basic solution into the reactor at the same time of mixing the aqueous metal-salt solution for the first interior and the aqueous metal-salt solution for the second interior in a mixing ratio from 100 v% : 0 v% to 0 v% : 100 v% with gradual variation, and forming the second interior to have a continuous concentration gradient for at least one of nickel, cobalt, and manganese.

The manufacturing method according to the present invention further includes, after the third step, a 3-1'st step of providing an aqueous metal-salt solution for a third interior that contains nickel, cobalt, and manganese and forming the third interior at the outside of the second interior.

A lithium composite oxide according to an embodiment of the present invention is given in Formula 4, wherein a sum of composition ratios of nickel, cobalt, and manganese is 1, wherein at least one of the composition ratios of nickel, cobalt, and manganese continuously varies in at least a part of particles; and wherein an average composition ratio of manganese over the particles is equal to or higher than 0.15 mol%.

[Formula 4] Lₐ₄Nₓ₄C_{y4}M_{z4}O_{2+δ}

(in the Formula 4, 0 < a4 ≤ 1.1, 0 ≤ x4 ≤ 1, 0 ≤ y4 ≤ 1, 0.05 ≤ z4 ≤ 1, 0.0 ≤ 8 ≤ 0.02)

According to an embodiment, the maximum of composition ratio of manganese in the particles may be higher than 0.15.

According to an embodiment, the particles may be secondary particles concentrated with a plurality of primary particles and the primary particles may be aligned toward the center of the particle in orientation.

According to an embodiment, an aspect ratio of the primary particles maybe to 10.

According to an embodiment, the composition ratio of manganese may increase toward the surface of the particle from the center of the particle, and a composition ratio of manganese on the surface of the particle may be larger than 0.15.

According to an embodiment, at least one of the composition ratios of nickel, cobalt, and manganese may exhibit a variation equal to or higher than 2 in number.

According to an embodiment, the particle may include a core part varying in the composition ratios of nickel, cobalt, and manganese; and a shell part having uniformity in the composition ratios of nickel, cobalt, and manganese and surrounding the core part.

According to an embodiment, the maximum value of the composition ratio of manganese in the core part may be identical to the composition ratio of manganese in the shell part. That is, the composition ratio of manganese may be continuous at a part touching with the core part and the shell part.

According to an embodiment, the composition ratio of manganese in the shell part may be higher than a composition ratio of manganese at a part, which touches with the shell part, of the core part. That is, the composition ratio of manganese may be discontinuous at a part touching with the core part and the shell part.

### ADVANTAGEOUS EFFECTS

A lithium composite oxide and a manufacturing method thereof is allowable to control shapes of primary particles even in a high temperature firing by controlling a concentration structure of manganese in particles at the center and the surface even while the content of manganese increases throughout the particles in order to raise thermal stability, and to secure infiltration paths of lithium ions by forming secondary particles from the condensing of stick-shaped primary particles, thereby resulting in high capacity.

### BRIEF DESCRIPTION OF THE DRAWINGS

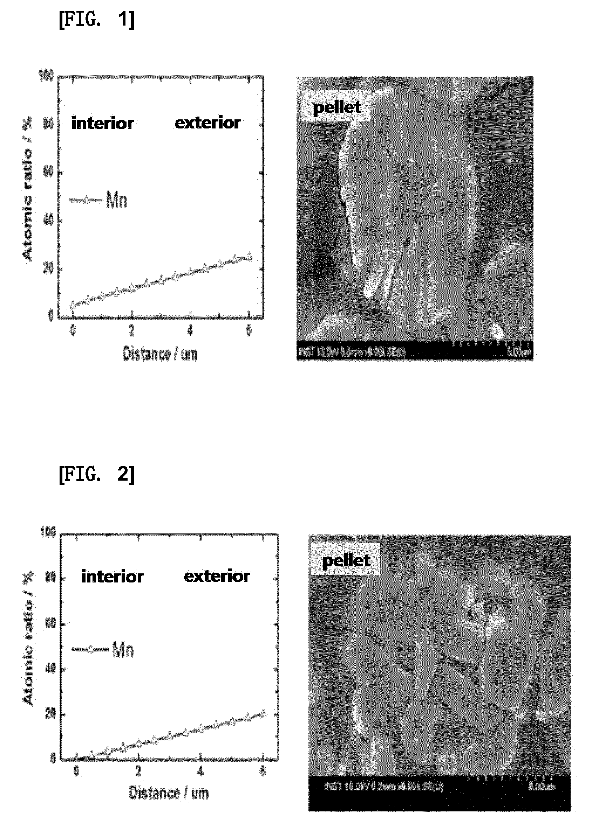

FIGS. 1 to 9 show results of measuring atomic ratios through Electron Probe Micro Analyzer (EPMA) while precursor particles manufactured by embodiments of comparisons of the present invention are migrating from the center to the surface, and results of measuring SEM photographs in active material particles manufactured by embodiments and comparisons of the present invention.

### MODES FOR EMBODIMENTS OF THE INVENTION

Hereinafter, various embodiments of the present invention will be described in conjunction with the accompanying drawings. The present invention, however, may not be intentionally confined in embodiments described below.

A lithium composite oxide according to the present invention includes a first interior which is formed in the range of radius r1 (0.2 µm ≤ r1 ≤ 5 µm) from the center of particle and defined by Formula 1, and a second interior which is formed in the range of r2 (r2 ≤ 10 µm) from the center of particle and defined by Formula 2.

[Formula 1] Liₐ₁Niₓ₁Co_{y1}Mn_{z1}O_{2+δ}

[Formula 2] Liₐ₂Niₓ₂Co_{y2}Mn_{z1}O_{2+δ}

In Formula and Formula 2, 0 < a1 ≤ 1.1, 0 < a2 ≤ 1.1, 0 ≤ x2 ≤ 1, 0 ≤ y2 ≤ 1, 0.05 ≤ z1 ≤ 1, 0.15 ≤ z2 ≤ 1, 0.15 ≤ z2 ≤ 1, 0 ≤ w ≤ 0.1, 0.0 ≤ δ ≤ 1, Z1 ≤ Z2.

According to an embodiment, the maximum values of z2 may be larger than 0.15. That is, the maximum value of manganese composition ratio may be larger than 0.15 in particle,

According to an embodiment, it may be allowable to be 0 ≤ Z2-Z1 ≤ 0.2 and 0.3 ≤ Z2+Z1. That is, a Mn composition ratio difference between the first interior and the second interior should be maintained in a specific range and a sum of Mn composition ratios of the first interior and the second interior may be preferred to be larger than 0.3.

A lithium composite oxide according to the present invention is technically characterized in, as can be seen from Formula 1 and Formula 2, maintaining primary particles in stick shapes rather than spherical shapes even in a high temperature firing by adjusting Mn ratios in the first interior and the second interior. As aforementioned, a firing is conventionally inevitable to be executed at a high temperature because primary particles are easily cohesive during in the case that a Mn content is high, but the present invention is technically characterized in maintaining primary particles in stick shape during a firing at a high temperature, as well as increasing thermal stability with a higher Mn content, by controlling the Mn content in the first interior and the second interior even while the Mn content is increasing for higher thermal stability.

Average composition over particles in a lithium composite oxide according to the present invention may be given in Formula 3.

[Formula 3] Liₐ₁Niₓ₃Co_{y3}Mn_{z3}O_{2+δ}

In Formula 3, it may be allowable to be 0.15 ≤ z3 ≤ 0.5. That is, an average value of manganese composition ratio over the particles may be larger than 0.15.

Additionally, a lithium composite oxide according to the present invention, as given in Formula 3, should have an average Mn composition higher than at least 15 mol% throughout the entire particle. In the present invention, the average Mn composition throughout the entire particle means an Mn composition which can result from the case that Mn injected for manufacturing particles is formed without a concentration gradient while Mn is practically injected with the concentration gradient in the particles.

Additionally, a lithium composite oxide according to the present invention has an aspect ratio of 1 to 10, and is characterized in that the stick-shaped primary particles are arranged with orientation toward the center.

Additionally, a lithium composite oxide is preferred to have the radius r1 of the first interior which is 0.2 µm ≤ r1 ≤ 5 µm. The first interior and the second interior can be differentiated by a size of the radius r1 of the first interior. In the case that the first interior is equal to or smaller than a specific size, the entire particle can be formed in one structure without differentiation between the first interior and the second interior.

Additionally, a lithium composite oxide according to the present invention is characterized in that at least a part of the second interior exhibits a continuous concentration gradient in at least one of nickel, cobalt, and manganese.

For a lithium composite oxide according to the present invention, the second interior is not limited to a concrete structure if only concentration of at least one of nickel, cobalt, and manganese exhibits a gradient in at least a part of particles. That is, it is allowable that concentration of at least one of nickel, cobalt, and manganese exhibits a continuous concentration gradient throughout the second interior, or that the second interior includes 2-1'th,..., and 2-n'th individual layers (n is equal to or larger than 2) which are different each other in at least one of concentration gradients of nickel, cobalt, and manganese.

Additionally, for a lithium composite oxide according to the present invention, in the case that the second interior exhibits a continuous concentration gradient in at least one of nickel, cobalt, and manganese, it is allowable to include a third interior with uniform concentration of nickel, cobalt, and manganese at the contour of the second interior

The present invention also provides a manufacturing method of a lithium composite oxide including a first step of preparing an aqueous metal-salt solution for a first interior and an aqueous metal-salt solution for a second interior that include nickel, cobalt, and manganese and that are different each other in concentration of nickel, cobalt, and manganese;

a second step of mixing the aqueous metal-salt solution for the first interior, a chelating agent, and an aqueous basic solution in a reactor and growing particles with uniform concentration of nickel, cobalt, and manganese in a radius of r1;

a third step of mixing the aqueous metal-salt solution for the second interior, a chelating agent, and an aqueous basic solution at the contour of the first interior in the reactor and forming particles to include the second interior with a radius of r2 at the contour of the first interior that has the radius of r1;

a fourth step of drying or thermally treating the particles to manufacture active material precursors; and

a fifth step of mixing the active material precursors and lithium salt and thermally treating the mixture at temperature equal to or higher than 850°C.

In the manufacturing method according to the present invention, the third step, in the case that concentration of at least one of nickel, cobalt, and manganese exhibits a continuous gradient in the second interior, includes a step of mixedly supplying the chelating agent and the aqueous basic solution into the reactor at the same time of mixing the aqueous metal-salt solution for the first interior and the aqueous metal-salt solution for the second interior in a mixing ratio from 100 v% : 0 v% to 0 v% : 100 v% with gradual variation, and forming the second interior to have a continuous concentration gradient for at least one of nickel, cobalt, and manganese.

The manufacturing method according to the present invention further includes, after the third step, a 3-1'th step of providing an aqueous metal-salt solution for a third interior that contains nickel, cobalt, and manganese and forming the third interior at the outside of the second interior.

A lithium composite oxide according to an embodiment of the present invention may be given in Formula 4

[Formula 4] Lₐ₄Nₓ₄Cy₄M_{z4}O_{2+δ}

In the Formula 4, 0 < a4 ≤ 1.1, 0 ≤ x4 ≤ 1, 0 ≤ y4 ≤ 1, 0.05 ≤ z4 ≤ 1, 0.0 ≤ δ ≤ 0.02.

In particles of a lithium composite oxide according to the present invention, concentration of at least one of the composition ratios of nickel, cobalt, and manganese may continuously vary. Assuming that a sum of composition ratios of nickel, cobalt, and manganese is 1, an average composition ratio of manganese over the particles is equal to or higher than 0.15.

According to an embodiment, the maximum of composition ratio of manganese in the particles may be higher than 0.15. For example, in the case that a composition ratio of manganese increases toward the surface from the center of the particle, a composition ratio of manganese may be higher than 0.15 at the surface of the particle.

According to an embodiment, the particles may be secondary particles concentrated with a plurality of stick-shaped primary particles and the primary particles may be aligned toward the center of the particle in orientation. That is, the stick-shaped primary particles may be aligned in a radial form from the center. An aspect ratio of the primary particles may be 1 to 10. In other words, the primary particles may be shaped in long sticks toward the surface from the center.

According to an embodiment, at least one of the composition ratios of nickel, cobalt, and manganese may exhibit a variation equal to or higher than 2 in number. That is, at least one of nickel, cobalt, and manganese may exhibit a concentration gradient in particles and the concentration gradient may be present with 2 or more in number.

According to an embodiment, the particle may include a core part varying in the composition ratios of nickel, cobalt, and manganese; and a shell part having uniformity in the composition ratios of nickel, cobalt, and manganese and surrounding the core part. That is, a particle according to the present invention may have a core part in which at least one of nickel, cobalt, and manganese exhibits a concentration gradient, and the surface of the particle may have a shell part which exhibits uniform composition of the nickel, the cobalt, and the manganese. For example, in the case that a composition ratio of nickel increases toward the surface from the center of the particle and then maintains uniformly, the part with uniform nickel composition may be a shell part. Additionally, it is even allowable to form a shell part which increases in a nickel composition ratio toward the surface from the center of the particle and then maintains other uniform concentration that is different from the final nickel composition ratio.

According to an embodiment, the maximum value of the composition ratio of manganese in the core part may be identical to the composition ratio of manganese in the shell part. That is, the composition ratio of manganese may be continuous at a part touching with the core part and the shell part.

According to an embodiment, the composition ratio of manganese in the shell part may be higher than a composition ratio of manganese at a part, which touches with the shell part, of the core part. That is, the composition ratio of manganese may be discontinuous at a part touching with the core part and the shell part.

### <Embodiment 1> Forming particles with exterior manganese ratio equal to or higher than 25 % and with interior manganese ratio equal to or higher than 5 %

After injecting distilled water into a co-precipitation reactor (equal to or higher than 4L-capacity and 80-W motor power) and then supplying nitrogen gas to the reactor in the rate of 0.5 liter/min, dissolved oxygen was removed therefrom and agitation was performed in 1000 rpm while maintaining the reactor at 50 °C.

For manufacturing particles which has 0.2 µm of particle size r1 in the first interior, 5 % of Mn ratio of a first interior, and 25 % of Mn ratio of a second interior, an aqueous metal solution of 2.4 M concentration, which was mixed in the mol ratio 90 : 5 : 5 of nickel sulfate, cobalt sulfate, and manganese sulfate, as an aqueous solution of metal salt for the second interior, was continuously injected with 0.3 liter/hour into the reactor, and an ammonia solution of 4.8 mol concentration was continuously injected with 0.03 liter/hour into the reactor.

After forming the first interior with the aqueous metal-salt solution for the first interior until the radius reaches 0.2 µm, an aqueous metal solution of 2.4 M concentration, which was mixed in the mol ratio 55 : 20 : 25 of nickel sulfate, cobalt sulfate, and manganese sulfate, as an aqueous metal-salt solution for the second interior, was mixedly supplied in variation of mixture ratios, from 100 v% : 0 v% to 0 v% : 100 v%, with an aqueous metal-salt solution for the first interior. Then, particles were manufactured.

### <Embodiment 2> Forming particles with exterior manganese ratio equal to or higher than 25 % and with interior manganese ratio equal to or higher than 5 %

After continuously injecting an aqueous metal solution of 2.4 M concentration, which was mixed in the mol ratio 90 : 0 : 10 of nickel sulfate, cobalt sulfate, and manganese sulfate, as an aqueous metal-salt solution for a first interior, at the rate 0.3 liter/hour to the reactor, continuously injecting an ammonia solution of 4.8 mol concentration at the rate 0.03 liter/hour to the reactor, and then growing particles until the radius reaches 0.2 µm, a mixed aqueous metal solution with mol ratio of 80 : 8 : 12 of nickel sulfate, cobalt sulfate, and manganese sulfate, as an aqueous metal-salt solution for the 2-1'th interior, was mixedly supplied to the reactor and further an aqueous metal-salt solution, which was mixed in the ratio 55 : 14 : 31 of nickel sulfate, cobalt sulfate, and manganese sulfate, for the 2-2'th interior was supplied thereto. Then, particles were manufactured.

### <Embodiment 3> Forming particles with exterior manganese ratio equal to or higher than 25 % and with interior manganese ratio equal to or higher than 5 %

After continuously injecting an aqueous metal solution of 2.4 M concentration, which was mixed in the mol ratio 80 : 10 : 10 of nickel sulfate, cobalt sulfate, and manganese sulfate, as an aqueous metal-salt solution for a first interior, at the rate 0.3 liter/hour to the reactor, continuously injecting an ammonia solution of 4.8 mol concentration at the rate 0.03 liter/hour to the reactor, and then growing particles until the radius reaches 5 µm, a mixed aqueous metal solution with mol ratio of 50 : 20 : 30 of nickel sulfate, cobalt sulfate, and manganese sulfate, as an aqueous metal-salt solution for a second interior, was mixedly supplied to the aqueous metal-salt solution for the first interior. Then, particles were manufactured.

### <Comparison 1>

Particles of Comparison 1 were manufactured in the same manner with Embodiment 1, except using an aqueous metal solution of 2.4 M concentration, which was mixed in the mol ratio 95 : 5 : 0 of nickel sulfate, cobalt sulfate, and manganese sulfate, as an aqueous metal-salt solution for a first interior and using an aqueous metal solution of 2.4 M concentration, which was mixed in the mol ratio 55 : 30 : 15 of nickel sulfate, cobalt sulfate, and manganese sulfate, as an aqueous metal-salt solution for a second interior.

### <Comparison 2>

Particles of Comparison 2 were manufactured in the same manner with Embodiment 2, except using an aqueous metal solution of 2.4 M concentration, which was mixed in the mol ratio 95 : 2 : 3 of nickel sulfate, cobalt sulfate, and manganese sulfate, as an aqueous metal-salt solution for a first interior and using an aqueous metal solution of 2.4 M concentration, which was mixed in the mol ratio 60 : 25 : 15 of nickel sulfate, cobalt sulfate, and manganese sulfate, as an aqueous metal-salt solution for a second interior.

### <Embodiment 4> Forming particles with exterior manganese ratio equal to or higher than 20 % and with interior manganese ratio equal to or higher than 10 %

Particles of Embodiment 4, containing Mn of 10 % at the first interior and Mn of 20 % at the exterior, were manufactured in the same manner with Embodiment 1, except using an aqueous metal solution of 2.4 M concentration, which was mixed in the mol ratio 80 : 10 : 10 of nickel sulfate, cobalt sulfate, and manganese sulfate, as an aqueous metal-salt solution for a first interior and using an aqueous metal solution of 2.4 M concentration, which was mixed in the mol ratio 60 : 20 : 20 of nickel sulfate, cobalt sulfate, and manganese sulfate, as an aqueous metal-salt solution for a second interior.

### <Embodiment 5> Forming particles with exterior manganese ratio equal to or higher than 20 % and with interior manganese ratio equal to or higher than 10 %

After forming the first interior until the radius reaches 0.2 µm by using an aqueous metal solution of 2.4 M concentration, which was mixed in the mol ratio 90 : 0 : 10 of nickel sulfate, cobalt sulfate, and manganese sulfate, for the first interior, an aqueous metal solution of 2.4 M concentration, which was mixed in the mol ratio 65 : 10 : 25 of nickel sulfate, cobalt sulfate, and manganese sulfate, for a second interior was used to form the second interior at the contour of the first interior.

### <Embodiment 6> Forming particles with exterior manganese ratio equal to or higher than 25 % and with interior manganese ratio equal to or higher than 5 %

After continuously injecting an aqueous metal solution of 2.4 M concentration, which was mixed in the mol ratio 90 : 0 : 10 of nickel sulfate, cobalt sulfate, and manganese sulfate, as an aqueous metal-salt solution for a first interior, at the rate 0.3 liter/hour to the reactor, continuously injecting an ammonia solution of 4.8 mol concentration at the rate 0.03 liter/hour to the reactor, and then growing particles until the radius reaches 0.2 µm, a mixed aqueous metal solution with mol ratio of 73 : 13 : 22 of nickel sulfate, cobalt sulfate, and manganese sulfate, as an aqueous metal-salt solution for the 2-1'th interior, was mixedly supplied to the reactor and further an aqueous metal-salt solution, which was mixed in the ratio 65 : 10 : 25 of nickel sulfate, cobalt sulfate, and manganese sulfate, for the 2-2'th interior was supplied thereto. Then, particles were manufactured in the same manner with Embodiment 2.

On the surface of the manufactured particle, an aqueous metal solution, which was mixed in the ratio 55 : 14 : 31 of nickel sulfate, cobalt sulfate, and manganese sulfate, for a third interior was individually supplied to manufacture particles with uniform concentration at the outmost contour.

### <Comparison 3>

Particles of Comparison 1 were manufactured in the same manner with Embodiment 1, except using an aqueous metal solution of 2.4 M concentration, which was mixed in the mol ratio 95 : 5 : 0 of nickel sulfate, cobalt sulfate, and manganese sulfate, as an aqueous metal-salt solution for a first interior and using an aqueous metal solution of 2.4 M concentration, which was mixed in the mol ratio 60 : 25 : 15 of nickel sulfate, cobalt sulfate, and manganese sulfate, as an aqueous metal-salt solution for a second interior.

### <Comparison 4>

Particles of Comparison 2 were manufactured in the same manner with Embodiment 2, except using an aqueous metal solution of 2.4 M concentration, which was mixed in the mol ratio 90 : 10 : 0 of nickel sulfate, cobalt sulfate, and manganese sulfate, as an aqueous metal-salt solution for a first interior and using an aqueous metal solution of 2.4 M concentration, which was mixed in the mol ratio 60 : 30 : 10 of nickel sulfate, cobalt sulfate, and manganese sulfate, as an aqueous metal-salt solution for a second interior.

### <Embodiment 7> Forming particles with exterior manganese ratio equal to or higher than 15 % and with interior manganese ratio equal to or higher than 15 %

Particles of Comparison 7 were manufactured in the same manner with Embodiment 1, containing Mn of 5 % at a first interior and Mn of 25 % at an exterior, except using an aqueous metal solution of 2.4 M concentration, which was mixed in the mol ratio 85 : 0 : 15 of nickel sulfate, cobalt sulfate, and manganese sulfate, as an aqueous metal-salt solution for a first interior and using an aqueous metal solution of 2.4 M concentration, which was mixed in the mol ratio 55 : 30 : 15 of nickel sulfate, cobalt sulfate, and manganese sulfate, as an aqueous metal-salt solution for a second interior.

### <Embodiment 8> Forming particles with exterior manganese ratio equal to or higher than 25 % and with interior manganese ratio equal to or higher than 5 %

Particles were manufactured in the same manner with Embodiment 2, except that after continuously injecting an aqueous metal solution of 2.4 M concentration, which was mixed in the mol ratio 80 : 5 : 15 of nickel sulfate, cobalt sulfate, and manganese sulfate, as an aqueous metal-salt solution for a first interior, at the rate 0.3 liter/hour to the reactor, continuously injecting an ammonia solution of 4.8 mol concentration at the rate 0.03 liter/hour to the reactor, and then growing particles until the radius reaches 0.2 µm, a mixed aqueous metal solution with mol ratio of 70 : 5 : 15 of nickel sulfate, cobalt sulfate, and manganese sulfate, as an aqueous metal-salt solution for the 2-1'th interior, was mixedly supplied to the reactor and further an aqueous metal-salt solution, which was mixed in the ratio 60 : 25 : 15 of nickel sulfate, cobalt sulfate, and manganese sulfate, for the 2-2'th interior was supplied thereto.

### <Embodiment 9> Forming particles with exterior manganese ratio equal to or higher than 25 % and with interior manganese ratio equal to or higher than 5 %

Particles including a second interior with uniformity of 50 : 30 : 20 of nickel, manganese, and cobalt were manufactured by individually supplying an aqueous metal solution which is mixed in the mol ratio 50 : 30 : 20 of nickel sulfate, cobalt sulfate, and manganese sulfate, as an aqueous metal-salt solution for the second interior, after continuously injecting an aqueous metal solution of 2.4 M concentration, which was mixed in the mol ratio 80 : 0 : 15 of nickel sulfate, cobalt sulfate, and manganese sulfate, as an aqueous metal-salt solution for a first interior, at the rate 0.3 liter/hour to the reactor, continuously injecting an ammonia solution of 4.8 mol concentration at the rate 0.03 liter/hour to the reactor, and then growing particles until the radius reaches 5 µm.

### <Comparison 5>

Particles of Comparison 5 were manufactured in the same manner with Embodiment 1, except using an aqueous metal solution of 2.4 M concentration, which was mixed in the mol ratio 85 : 5 : 10 of nickel sulfate, cobalt sulfate, and manganese sulfate, as an aqueous metal-salt solution for a first interior and using an aqueous metal solution of 2.4 M concentration, which was mixed in the mol ratio 65 : 25 : 10 of nickel sulfate, cobalt sulfate, and manganese sulfate, as an aqueous metal-salt solution for a second interior.

### <Comparison 6>

Particles having two metal-ion concentration gradients therein were manufactured in the same manner with Embodiment 2, except that after continuously injecting an aqueous metal solution of 2.4 M concentration, which was mixed in the mol ratio 95 : 0 : 5 of nickel sulfate, cobalt sulfate, and manganese sulfate, as an aqueous metal-salt solution for a first interior, at the rate 0.3 liter/hour to the reactor, growing until the radius reaches 0.2 µm, and continuously injecting an ammonia solution of 4.8 mol concentration at the rate 0.03 liter/hour to the reactor and growing particles until the radius reaches 0.2 µm, a mixed aqueous metal solution with mol ratio of 80 : 10 : 10 of nickel sulfate, cobalt sulfate, and manganese sulfate, as an aqueous metal-salt solution for the 2-1'th interior, was mixedly supplied to the reactor and further an aqueous metal-salt solution, which was mixed in the ratio 60 : 25 : 10 of nickel sulfate, cobalt sulfate, and manganese sulfate, for the 2-2'th interior was supplied thereto.

### <Experimental example> Confirming concentration gradient structure in oxide particles

To confirm concentration gradient structures respective to metals up to the surface from the center of oxide particle which were manufactured through the Embodiment 1 and Comparisons 1 and 2, Electron Probe Micro Analyzer (EPMA) was employed to measure an atomic ratio of the oxide particles, which were manufactured through Embodiment 1 and Comparisons 1 and 2, while moving from the center toward the surface, and results of the measurement was shown respectively in FIGs. 1 to 3.

### <Experimental Example> Measuring particle section

A SEM measured sections of oxide particles which were manufactured through Embodiment 1 and Comparisons 1 and 2 and results of the measurement were shown in FIGS. 1 to 3.

Comparative to that the oxide manufactured through Embodiment 2 as shown in FIG. 1 is formed with primary particles shaped in stick, it can be seen that FIGS. 2 and 3 respectively showing Comparisons 1 and 2 represent that concentration of manganese exhibits a uniform gradient in particles but primary particles are spherical-shaped not stick-shaped.

### <Experimental example> Confirming concentration gradient structure in oxide particles

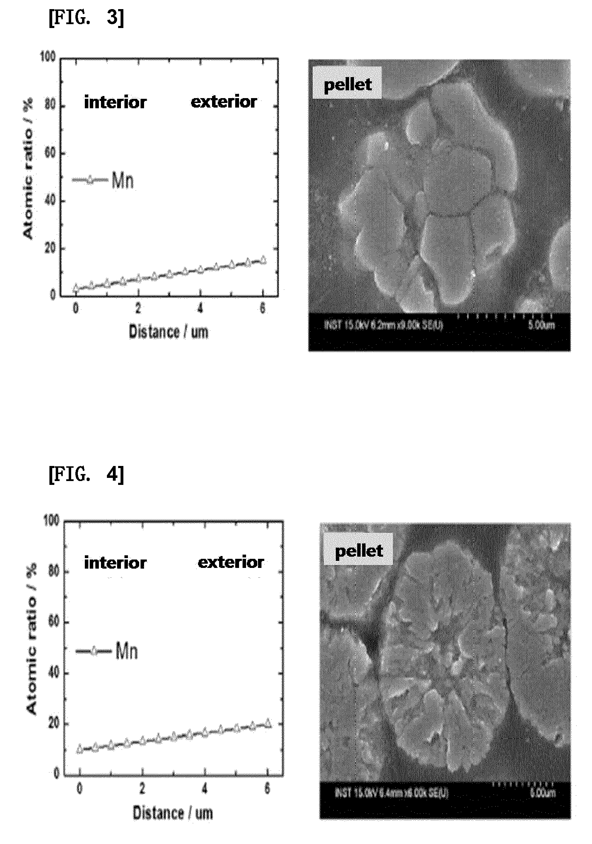

To confirm concentration gradient structures respective to metals up to the surface from the center of oxide particle which were manufactured through the Embodiment 4 and Comparisons 3 and 4, Electron Probe Micro Analyzer (EPMA) was employed to measure an atomic ratio of the oxide particles, which were manufactured through Embodiment 4 and Comparisons 3 and 4, while moving from the center toward the surface, and results of the measurement was shown respectively in FIGs. 4 to 6.

### <Experimental Example> Measuring particle section

A SEM measured sections of oxide particles which were manufactured through Embodiment 4 and Comparisons 3 and 4 and results of the measurement were shown in FIGS. 4 to 6.

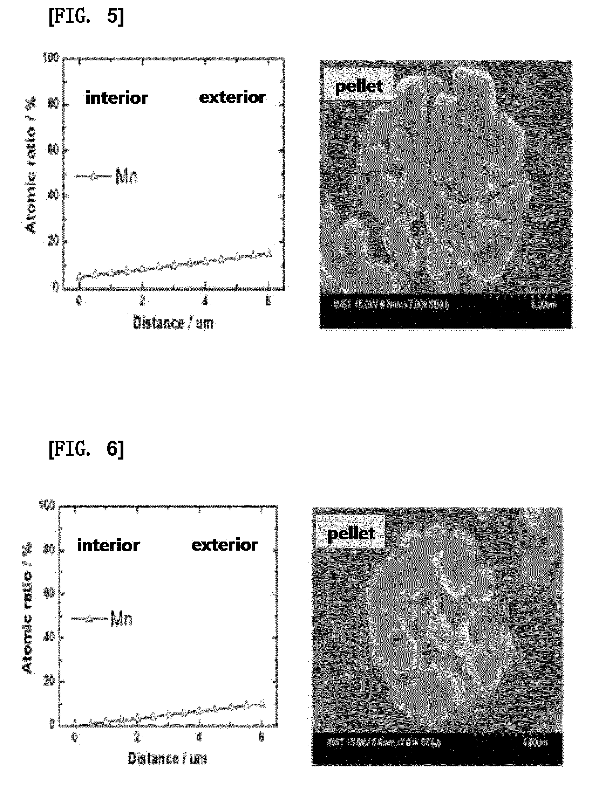

Comparative to that the oxide manufactured through Embodiment 1 as shown in FIG. 4 is formed with primary particles shaped in stick, it can be seen that FIGS. 5 and 6 respectively showing Comparisons 3 and 4 represent that concentration of manganese exhibits a uniform gradient in particles but primary particles are spherical-shaped not stick-shaped.

### <Experimental example> Confirming concentration gradient structure in oxide particles

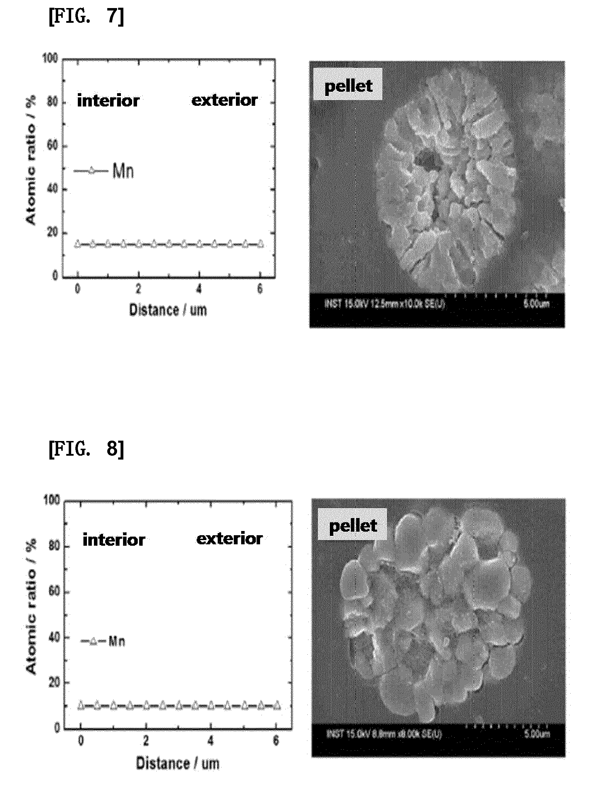

To confirm concentration gradient structures respective to metals up to the surface from the center of oxide particle which were manufactured through the Embodiment 7 and Comparisons 5 and 6, Electron Probe Micro Analyzer (EPMA) was employed to measure an atomic ratio of the oxide particles, which were manufactured through the Embodiment 7 and Comparisons 5 and 6, while moving from the center toward the surface, and results of the measurement was shown respectively in FIGS. 7 to 9.

### <Experimental Example> Measuring particle section

A SEM measured sections of oxide particles which were manufactured through Embodiment 7 and Comparisons 5 and 6 and results of the measurement were shown in FIGS. 1 to 3.

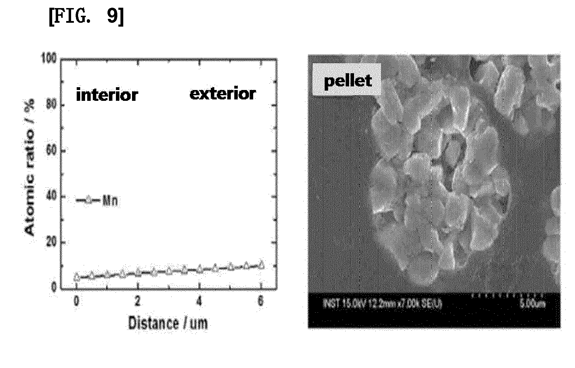

Comparative to that the oxide manufactured through Embodiment 7 as shown in FIG. 7 is formed with primary particles shaped in stick, it can be seen that FIGS. 8 and 9 respectively showing the sections of the particles of Comparisons 5 and 6 represent that concentration of manganese exhibits a uniform gradient in particles but primary particles are spherical-shaped not stick-shaped.

Shapes, which are found from primary particles manufactured through Embodiments 1 to 9 and Comparisons 1 to 6, are summarized in Table 1.

**[Table 1]**

| | Primary particle | Average particle composition (Nickel; Manganese; Cobalt) |
|---|---|---|
| Embodiment 1 | Stick | 62 : 17 : 21 |
| Embodiment 2 | Stick | 70 : 10 : 20 |
| Embodiment 3 | Stick | 67 : 14 : 19 |
| Comparison 1 | Sphere | 63 : 25 : 12 |
| Comparison 2 | Sphere | 87 : 07 : 06 |
| Embodiment 4 | Stick | 64 : 18 : 18 |
| Embodiment 5 | Stick | 80 : 04 : 16 |
| Embodiment 6 | Stick | 72 : 06 : 22 |
| Comparison 3 | Sphere | 66 : 21 : 13 |
| Comparison 4 | Sphere | 77 : 19 : 04 |
| Embodiment 7 | Stick | 61 : 24 : 15 |
| Embodiment 8 | Stick | 67 : 18 : 15 |
| Embodiment 9 | Stick | 57 : 24 : 19 |
| Comparison 5 | Sphere | 69 : 21 : 10 |
| Comparison 6 | Sphere | 75 : 15 : 10 |

### <Experimental Example> Measuring battery characteristics

Active material particles, which were manufactured through Embodiments 1 to 9 and Comparisons 1 to 6, were used to manufacture an anode for half-cells.

Table 2 summarizes results of measuring tap density and cycle characteristics by measuring capacities after 100 cycles and capacities of the half-cells manufactured through Embodiments 1 to 6.

**[Table 1]**

| | Capacity (mAh/h)-2.7-4.3V, 0.1C | Lifetime characteristics (%)-2.7-4.3V, 0.5C, 100 cycle | Tap density |
|---|---|---|---|
| Embodiment 1 | 193.1 | 95.8 | 2.51 |
| Embodiment 2 | 204.5 | 95.1 | 2.53 |
| Embodiment 3 | 210.6 | 93.9 | 2.51 |
| Comparison 1 | 184.3 | 89.7 | 2.26 |
| Comparison 2 | 210.1 | 81.6 | 2.20 |
| Embodiment 4 | 198.6 | 95.5 | 2.54 |
| Embodiment 5 | 215.1 | 94.3 | 2.52 |
| Embodiment 6 | 208.8 | 95.0 | 2.53 |
| Comparison 3 | 197.0 | 88.4 | 2.27 |
| Comparison 4 | 204.4 | 86.0 | 2.24 |
| Embodiment 7 | 191.1 | 96.3 | 2.55 |
| Embodiment 8 | 208.7 | 94.9 | 2.54 |
| Embodiment 9 | 212.6 | 94.3 | 2.51 |
| Comparison 5 | 198.4 | 88.0 | 2.25 |
| Comparison 6 | 205.9 | 86.3 | 2.21 |

### INDUSTRIAL USABILITY

It is allowable for a lithium composite oxide and a manufacturing method thereof to provide a high capacity because lithium-ion infiltration paths are secured by forming secondary particles through concentration of stick-shaped primary particles and because a shape of primary particles is controlled even in a high temperature firing by controlling a concentration of manganese at the center and the surface even while the content of manganese increases for higher thermal stability.

## Claims

1. A lithium composite oxide comprising:
a first interior formed of secondary particles concentrated with a plurality of stick-shaped primary particles, formed in a radius of r1 (0.2 µm ≤ r1 ≤ 5 µm) from the center of the particle, and given in Formula 1 that is Liₐ₁Niₓ₁Co_{y1}Mn_{z1}O_{2+δ}; and
a second interior formed to a radius of r2 (r1 ≤ 10 µm) from the center of the particle and given in Formula 2 that is Lᵢₐ₂Nᵢₓ₂C_{oy2}M_{nz1}O_{2+δ} (in the Formula 1 and the Formula 2, 0 < a1 ≤ 1.1, 0 < a2 ≤ 1.1, 0 ≤ x2 ≤ 1, 0 ≤ y2 ≤ 1, 0.05 ≤ z1 1, 0.15 ≤ z2 ≤ 1,0.15 ≤ z2 ≤ 1,0 ≤ w ≤ 0.1, 0.0 ≤ δ ≤ 1, Z1 ≤ Z2).

2. The lithium composite oxide of claim 1, wherein 0 ≤ Z2-Z1 ≤ 0.2 and 0.3 ≤ Z2+Z1.

3. The lithium composite oxide of claim 1, wherein average composition of the overall concentration of the lithium composite oxide is given in Formula 3 that is Liₐ₁Niₓ₃C_{oy3}Mn_{z3}O_{2+δ} (in the Formula 3, 0.15 ≤ z3 ≤ 0.5).

4. The lithium composite oxide of claim 1, wherein an aspect ratio of the primary particles is 1 to 10.

5. The lithium composite oxide of claim 1, wherein the primary particles are aligned with orientation toward the center in the particle.

6. The lithium composite oxide of claim 1, wherein concentration of at least one of nickel, cobalt, and manganese exhibits a continuous gradient in at least a part of the second interior.

7. The lithium composite oxide of claim 6, wherein the second interior comprises a 2-1'th interior,..., and a 2-n'th interior (n is larger than 2) which are different each other in concentration gradient for at least one of nickel, cobalt, and manganese.

8. The lithium composite oxide of claim 6, further comprising:
a third interior formed at the contour of the second interior and having uniform concentration of nickel, cobalt, and manganese.

9. A manufacturing method of a lithium composite oxide, the method comprising:
preparing an aqueous metal-salt solution for a first interior and an aqueous metal-salt solution for a second interior that include nickel, cobalt, and manganese and that are different each other in concentration of nickel, cobalt, and manganese;
mixing the aqueous metal-salt solution for the first interior, a chelating agent, and an aqueous basic solution in a reactor and growing particles with uniform concentration of nickel, cobalt, and manganese in a radius of r1;
mixing the aqueous metal-salt solution for the second interior, a chelating agent, and an aqueous basic solution at the contour of the first interior in the reactor and forming particles to include the second interior with a radius of r2 at the contour of the first interior that has the radius of r1;
drying or thermally treating the particles to manufacture active material precursors; and
mixing the active material precursors and lithium salt and thermally treating the mixture at temperature equal to or higher than 850°C.

10. The manufacturing method of claim 9, wherein the mixing of the aqueous metal-salt solution for the second interior, the chelating agent, and the aqueous basic solution and the forming of the particle comprises:
mixedly supplying the chelating agent and the aqueous basic solution into the reactor at the same time of mixing the aqueous metal-salt solution for the first interior and the aqueous metal-salt solution for the second interior in a mixing ratio from 100 v% : 0 v% to 0 v% : 100 v% with gradual variation, and forming the second interior to have a continuous concentration gradient for at least one of nickel, cobalt, and manganese.

11. The manufacturing method of claim 9, further comprising: after the mixing of the aqueous metal-salt solution for the second interior, the chelating agent, and the aqueous basic solution and the forming of the particle, providing an aqueous metal-salt solution for a third interior that contains nickel, cobalt, and manganese and forming the third interior at the outside of the second interior.

12. A lithium composite oxide given in Formula 4 that is Lₐ₄Nₓ₄C_{y4}M_{z4}O_{2+δ} (in the Formula 4, 0 < a4 ≤ 1.1, 0 ≤ x4 ≤ 1, 0 ≤ y4 ≤ 1, 0.05 ≤ z4 ≤ 1, 0.0 ≤ 6 ≤ 0.02),
wherein a sum of composition ratios of nickel, cobalt, and manganese is 1, wherein at least one of the composition ratios of nickel, cobalt, and manganese continuously varies in at least a part of particles; and
wherein an average composition ratio of manganese over the particles is equal to or higher than 0.15 mol%

13. The lithium composite oxide of claim 12, wherein the maximum of composition ratio of manganese in the particles is higher than 0.15.

14. The lithium composite oxide of claim 12, wherein the particles are secondary particles concentrated with a plurality of stick-shaped primary particles and the primary particles are aligned toward the center of the particle in orientation.

15. The lithium composite oxide of claim 14, wherein an aspect ratio of the primary particles is 1 to 10.

16. The lithium composite oxide of claim 12, wherein the composition ratio of manganese increases toward the surface of the particle from the center of the particle, and
wherein a composition ratio of manganese on the surface of the particle is larger than 0.15.

17. The lithium composite oxide of claim 12, wherein at least one of the composition ratios of nickel, cobalt, and manganese has a variation equal to or higher than 2 in number.

18. The lithium composite oxide of claim 12, wherein the particle comprises:
a core part varying in the composition ratios of nickel, cobalt, and manganese; and
a shell part having uniformity in the composition ratios of nickel, cobalt, and manganese and surrounding the core part.

19. The lithium composite oxide of claim 18, wherein the maximum value of the composition ratio of manganese in the core part is identical to the composition ratio of manganese in the shell part.

20. The lithium composite oxide of claim 18, wherein the composition ratio of manganese in the shell part is higher than a composition ratio of manganese at a part, which touches with the shell part, of the core part.
